# EUROPEAN PATENT APPLICATION

(11) **EP 2 868 558 A1**
(43) Date of publication of application: **06.05.2015**
(21) Application number: 14191807.8
(22) Date of filing: 05.11.2014
(51) Int. Cl.: B62K 3/00, B62K 15/00

(54) **Concealed folding mechanism for a kick scooter**

(30) Priority: 05.11.2013 TW 102140182
(71) Applicant: J.D Components Co., Ltd., Shou Shui Hsiang, Chang Hua Hsien (TW)
(72) Inventor: Li, Jacklee, CHANG HUA HSIEN (TW); Huang, Ben, CHANG HUA HSIEN (TW); Wu, Zeke, CHANG HUA HSIEN (TW)
(74) Representative: Straus, Alexander

(57) **Abstract**

A concealed folding mechanism (20) for a kick scooter (10) includes a joint seat (30), a puller (40), and a folding unit (50). The puller (40) is pivotally installed in joint seat (30) and defines an accommodating space (22) jointly with joint seat (30) for concealing the folding unit (50), so as to make the overall structure streamline. The folding unit (50), the joint seat (30) and the puller (40) are pivotally connected together, so that the folding unit (50) is controllable by the puller (40) to shift the joint seat (30) between a folded position (P2) and an unfolded position (PI). When the joint seat (30) is at the unfolded position (P1), good structural reliability is provided.

## Description

### BACKGROUND OF THE INVENTION

### 1. Technical Field

The present invention relates to kick scooters, and more particularly to a concealed folding mechanism for a kick scooter.

### 2. Description of Related Art

For easy carrying and storage, a kick scooter typically has a folding mechanism between its deck and handlebar stem. Such a folding mechanism allows the handlebar stem to be drawn close to the deck, thereby compacting or folding the kick scooter.

Some prior-art devices are related to such a folding mechanism. Taiwan Patent No. 505130 uses a locking handle to drive a positioning pin to leave from a positioning hole, thereby allowing a handle stem to be folded. However, as this patented folding mechanism is entirely exposed outside, the structure is less streamline and the mechanism tends to have accidental operation when receiving unwanted external force. For preventing such accidental operation, Taiwan Patent No. 461418 makes an improvement wherein the folding mechanism is hidden under the deck. However, in this patented folding mechanism, the engagement among components only relies on the combination of a retaining block and a retaining hook that is not firm enough to resist road vibration. Once the retaining block and retaining hook separate during the use of the kick scooter, the user of the kick scooter is subject to danger and injury.

### SUMMARY OF THE INVENTION

The primary objective of the present invention is to provide a concealed folding mechanism for a kick scooter, which maintains good structural streamline when unfolded, and ensures good structural reliability when folded.

For achieving the foregoing objective, the presently disclosed concealed folding mechanism comprises a joint seat, a puller, and a folding unit. The puller is pivotally installed in the joint seat and defines an accommodating space jointly with the joint seat. The folding unit is deposited in the accommodating space and thereby concealed. The folding unit, the joint seat and the puller are pivotally connected, so that the folding unit is controllable by the puller to shift the joint seat between a folded position and an unfolded position.

Preferably, the joint seat has two opposite and symmetric joint pieces, and the puller is pivotally connected between the two joint pieces by means of a puller pivot, so that the puller and the two joint pieces jointly define the accommodating space. Thereby, when the joint seat is at the unfolded position, the puller has its outer surface substantially flush with top edges of the two joint pieces.

Preferably, the joint seat has a locking pin that is connected between the two joint pieces, and the folding unit has a fixing seat that is deposited between the two joint pieces and allows the puller pivot to insert thereinto, in which the fixing seat has a guiding groove that receives the locking pin so that the joint seat is guided during the folding or unfolding operation.

Preferably, the folding unit further has a first locking block and a second locking block. The first locking block is pivotally installed in the fixing seat and has a first locking recess. The second locking block is pivotally installed in the fixing seat and has a second locking recess. Thus, when the joint seat is at the folded position, the locking pin of the joint seat engages with the first locking recess of the first locking block, and when the joint seat is at the unfolded position, the locking pin of the joint seat engages with the second locking recess of the second locking block.

Preferably, the folding unit further has a resilient element that is deposited in the fixing seat, so that when the joint seat is at the unfolded position, the resilient element abuts against the locking pin, thereby eliminating any gaps between the locking pin and the second locking recess, so as to improve the structural stability.

Preferably, the first locking block has a first retaining portion that is adjacent to the first locking recess, so that when the joint seat is shifting between the folded position and the unfolded position, the locking pin pushes the first retaining portion and in turn forces the first locking block to rotate.

Preferably, the second locking block has a second retaining portion, and the folding unit further has a retaining block that is fixedly mounted on the puller pivot and has a third retaining portion, in which the third retaining portion of the retaining block detachably abuts against the second retaining portion of the second locking block.

### BRIEF DESCRIPTION OF THE DRAWINGS

FIG. 1 is a perspective view of a kick scooter with a concealed folding mechanism of the present invention, wherein the kick scooter is unfolded.
FIG. 2 is a perspective view of the concealed folding mechanism of the present invention.
FIG. 3 is a cross-sectional view of the concealed folding mechanism of the present invention, showing a joint seat at an unfolded position.
FIG. 4, similar to FIG. 3, shows a puller is pulled.
FIG. 5, similar to FIG. 4, shows the joint seat rotating from the unfolded position to a folded position.
FIG. 6, similar to FIG. 5, shows the joint seat at the folded position.
FIG. 7 is a side view of the kick scooter with the concealed folding mechanism of the present invention, wherein the kick scooter is folded.

### DETAILED DESCRIPTION OF THE INVENTION

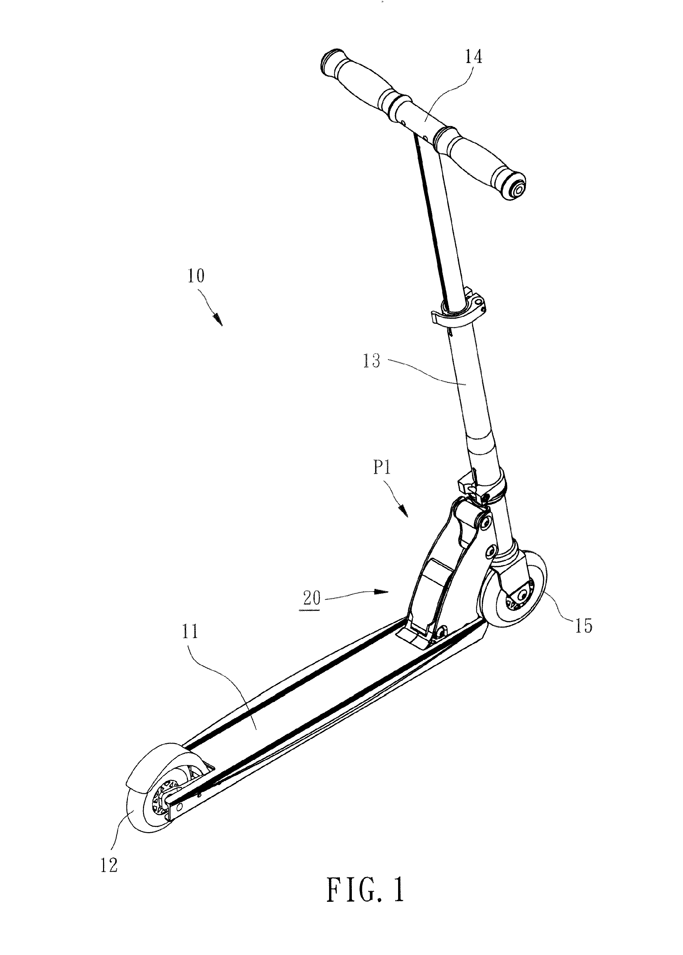

Referring to FIG. 1, according to the present invention, a kick scooter 10 primarily comprises a deck 11, a rear wheel 12 attached to a rear end of the deck 11, a handlebar stem 13 attached to a front end of the deck 11, a handlebar 14 mounted on a top of the handlebar stem 13, and a front wheel 15 attached to a bottom of the handlebar stem 13. In addition, the deck 11 has its front end connected with the handlebar stem 13 via a concealed folding mechanism 20 of the present invention.

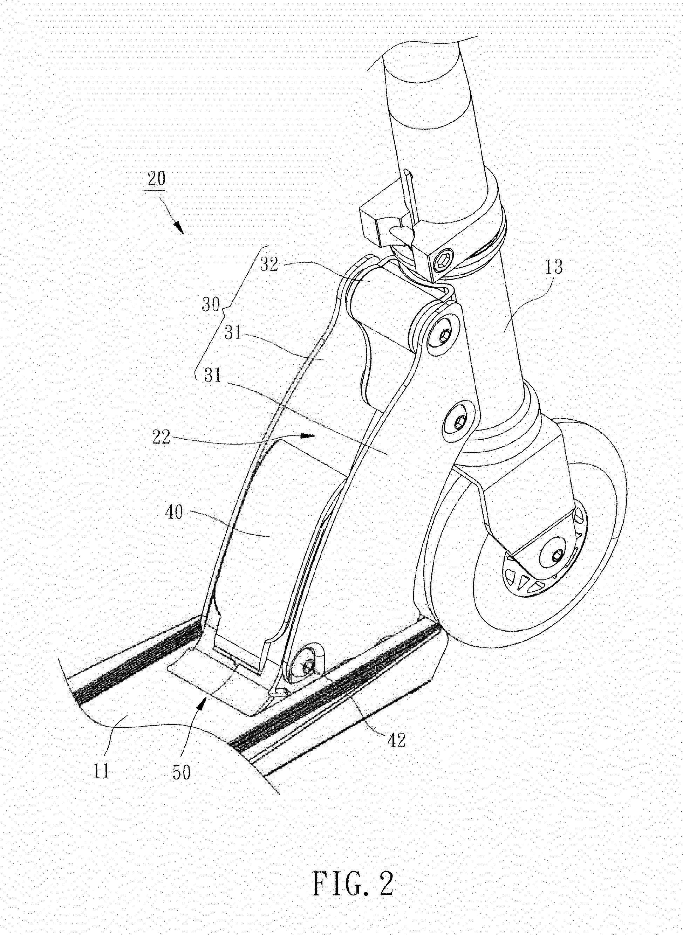

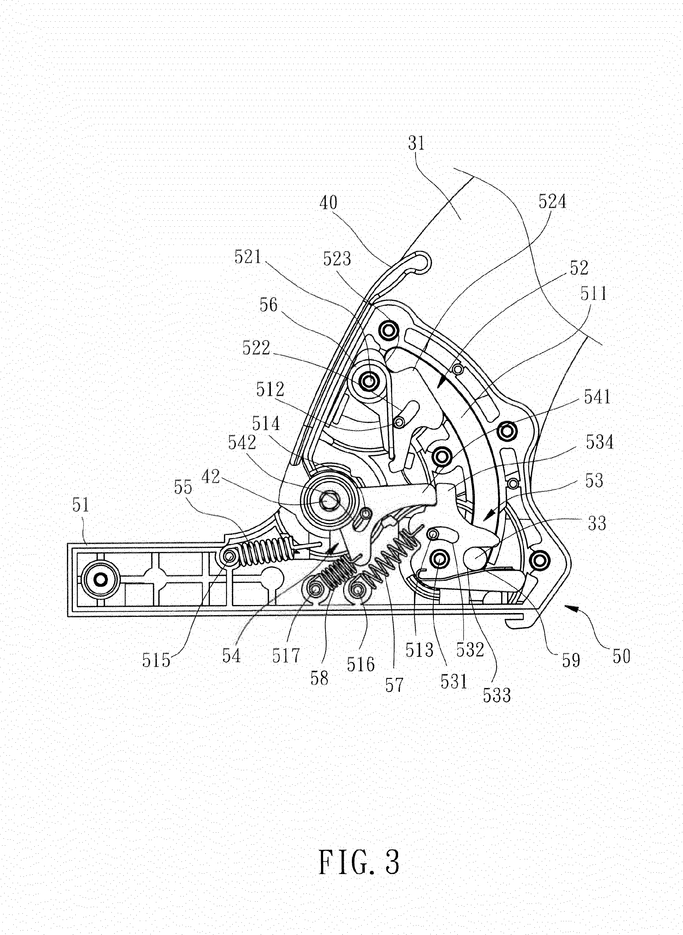

Referring to FIG. 2 and FIG. 3, the presently disclosed concealed folding mechanism 20 comprises a joint seat 30, a puller 40, and a folding unit 50.

The joint seat 30 has two opposite and symmetric joint pieces 31. The two joint pieces 31 have their tops connected by a reinforcing member 32 that is fixed to the handlebar stem 13, and have their bottoms connected by a locking pin 33 (as shown in FIG. 3).

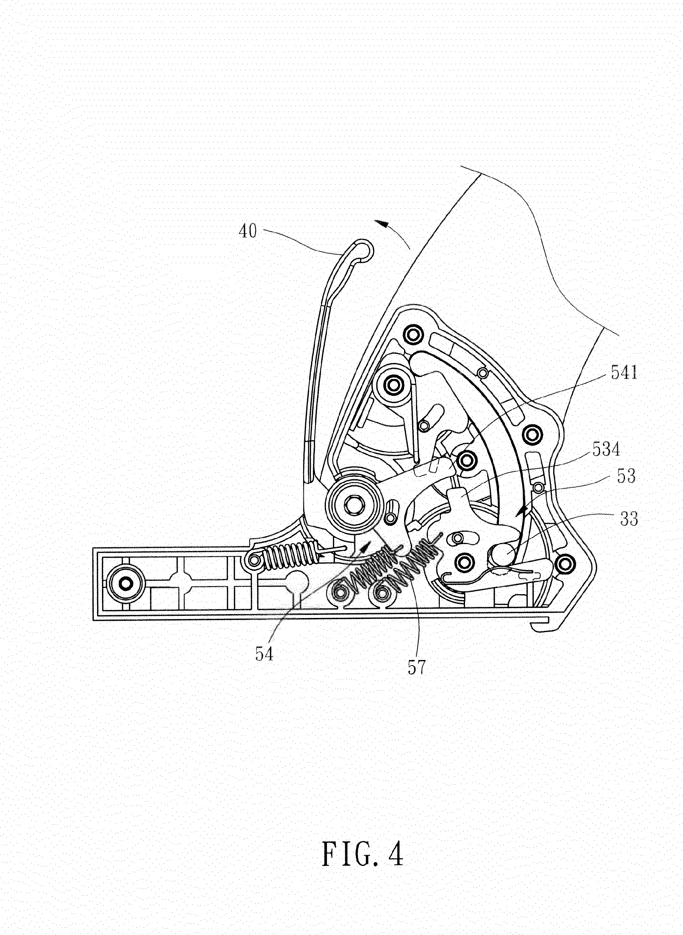

The puller 40 is arranged between the two joint pieces 31 and is connected to the two joint pieces 31 via a puller pivot 42, so that an accommodating space 22 is defined between the puller 40 and the two joint pieces 31. The puller 40 normally has its outer surface substantially flush with the top edges of the two joint pieces 31 (as shown in FIG. 2 and FIG. 3). When receiving a pulling force, the puller 40 pivots on the puller pivot 42 away from the joint seat 30 (as shown in FIG. 4).

The folding unit 50 has a fixing seat 51, a first locking block 52, a second locking block 53, and a retaining block 54, as shown in FIG. 2 and FIG. 3.

The fixing seat 51 has its rear end connected to the front end of the deck 11, and has its front end extended into the accommodating space 22 for the puller pivot 42 to insert thereinto. Additionally, the fixing seat 51 has a guiding groove 511 for receiving the locking pin 33. The fixing seat 51 has a first limiting portion 512, a second limiting portion 513, a third limiting portion 514, a first fixing portion 515, a second fixing portion 516, and a third fixing portion 517 distributed therein.

The first locking block 52 is installed in the fixing seat 51 by means of a first pivot shaft 521 and has a first limiting recess 522 fittingly receiving the first limiting portion 512 of the fixing seat 51, so that the first locking block 52 is allowed to rotate within a predetermined range. The first locking block 52 further has a first locking recess 523 and a first retaining portion 524 adjacent to the first locking recess 523. The first retaining portion 524 projects from the guiding groove 511 of the fixing seat 51.

The second locking block 53 is installed in the fixing seat 51 by means of a second pivot shaft 531 and has a second limiting recess 532 fittingly receiving the second limiting portion 513 of the fixing seat 51, so that the second locking block 53 is also limited to rotate within a predetermined range. Moreover, the second locking block 53 has a second locking recess 533 and a second retaining portion 534.

The retaining block 54 is fixedly mounted on the puller pivot 42 so as to move synchronously with the puller 40. The retaining block 54 has a third retaining portion 541 and a third limiting recess 542, and is mounted on the third limiting portion 514 of the fixing seat 51 through the third limiting recess 542, so that the retaining block 54 is allowed to rotate within a predetermined range.

The folding unit 50 further has a first spring member 55, a second spring member 56, a third spring member 57, and a fourth spring member 58.

The first spring member 55 (herein an extension spring being taken for example) is deposited in the fixing seat 51. The first spring member 55 has one end connected to the puller 40, and an opposite end connected to the first fixing portion 515 of the fixing seat 51, so as to provide a returning force to the puller 40.

The second spring member 56 (herein a torsion spring being taken for example) is mounted around the first pivot shaft 521. The second spring member 56 has one end abutting against an inner wall of the fixing seat 51, and has an opposite end abutting against the first locking block 52, so as to provide a returning force to the first locking block 52.

The third spring member 57 (herein an extension spring being taken for example) is deposited in the fixing seat 51. The third spring member 57 has one end connected to the second locking block 53, and has an opposite end connected to the second fixing portion 516 of the fixing seat 51, so as to provide a pulling force to the second locking block 53.

The fourth spring member 58 (herein an extension spring being taken for example) is deposited in the fixing seat 51. The fourth spring member 58 has one end connected to the retaining block 54, and has an opposite end connected to the third fixing portion 517 of the fixing seat 51, so as to provide a returning force to the retaining block 54.

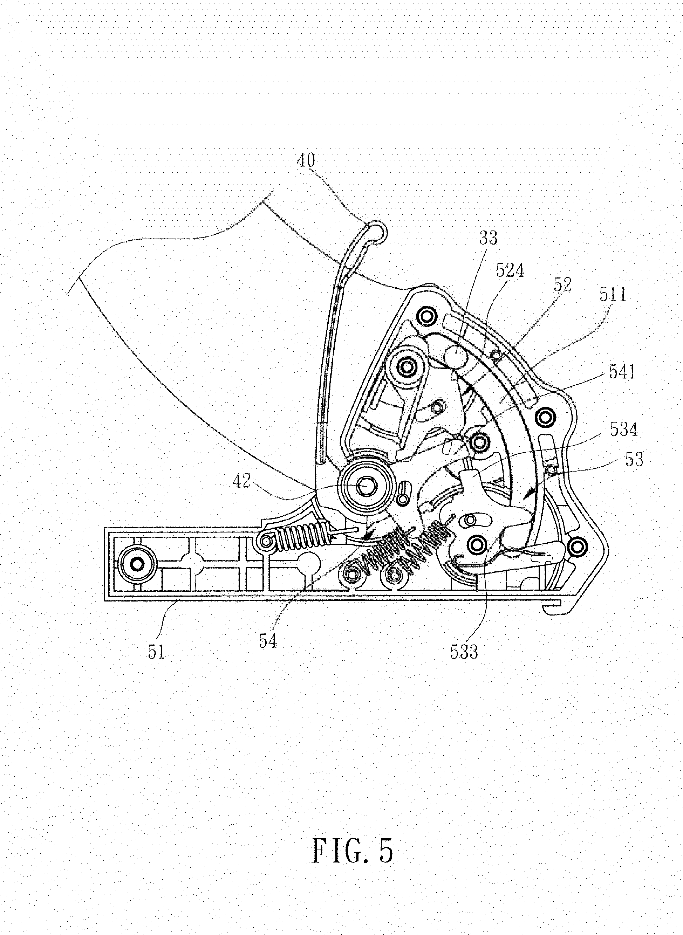

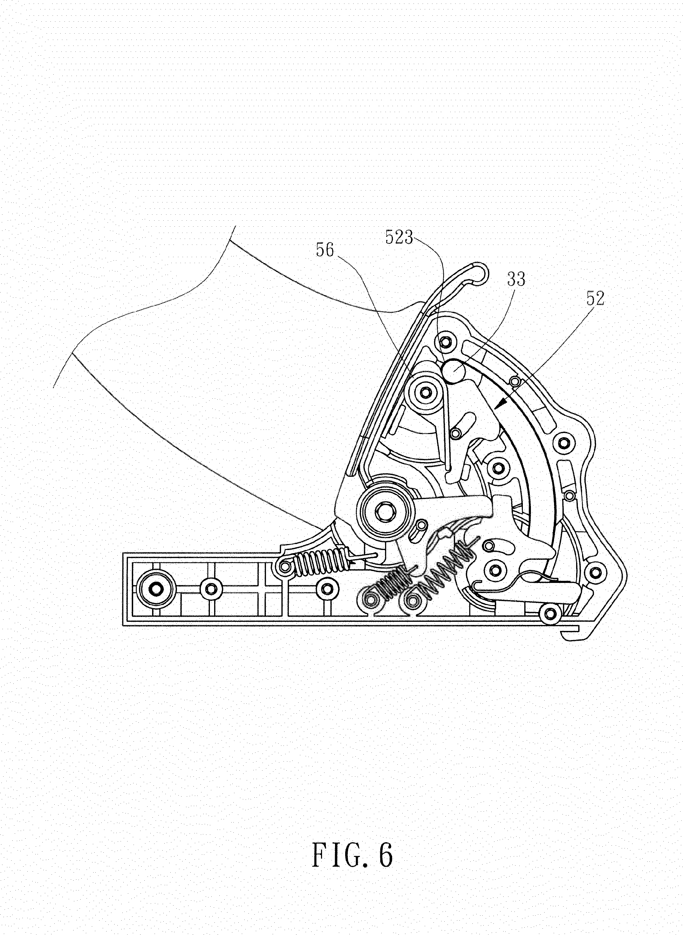

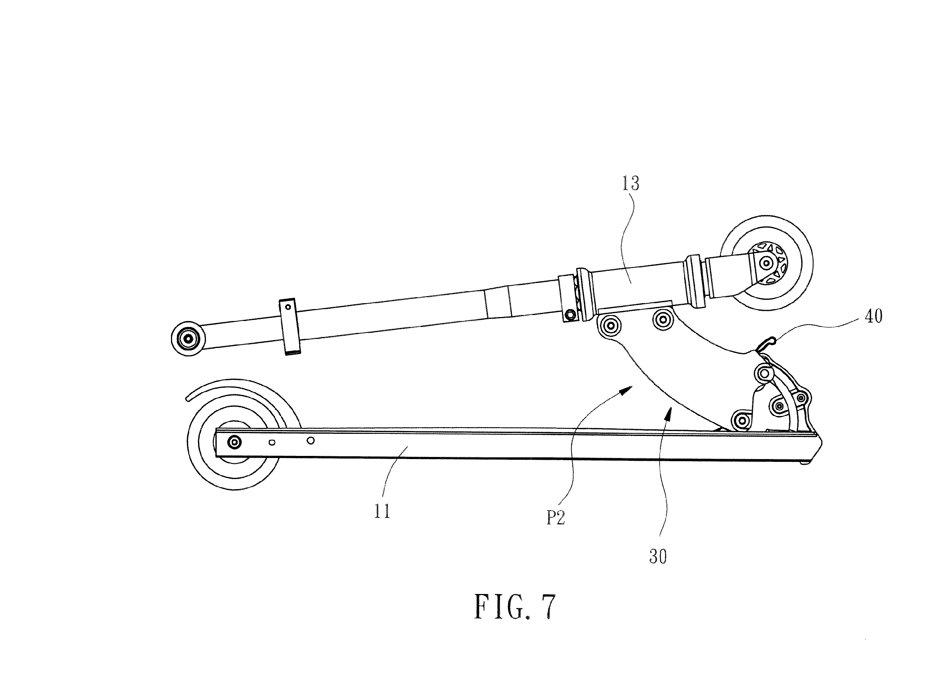

Referring to FIG. 3 and FIG. 4, for folding the kick scooter 10, the operation involves first pulling the puller 40 in order to drive the retaining block 54 to rotate, making the third retaining portion 541 of the retaining block 54 disengage from the second retaining portion 534 of the second locking block 53, so that the second locking block 53 slightly rotates under the pulling force applied by the third spring member 57. Then the joint seat 30 is made to pivot on the puller pivot 42 toward the deck 11. As the joint seat 30 rotates, as shown in FIG. 5, the locking pin 33 of the joint seat 30 disengages from the second locking recess 533 of the second locking block 53 and moves upward along the guiding groove 511 of the fixing seat 51 until the locking pin 33 touches the first retaining portion 524 of the first locking block 52. At this time, the first locking block 52 is pushed by the locking pin 33 continuously and starts to rotate. Once the locking pin 33 passes the first retaining portion 524 of the first locking block 52, the first locking block 52 is returned to its initial position by the resilience of the second spring member 56, so that the locking pin 33 is held in the first locking recess 523 of the first locking block 52, as shown in FIG. 6. At this time, the joint seat 30 can drive the handlebar stem 13 to come to a folded position P2, as shown in FIG. 7.

To unfold the joint seat 30, the operation also involves first pulling the puller 40 in order to disengage the third retaining portion 541 of the retaining block 54 from the second retaining portion 534 of the second locking block 53. Then the joint seat 30 is pivoted away from the deck 11. As the joint seat 30 rotates, as shown in FIG. 6, the locking pin 33 first pushes the first retaining portion 524 of the first locking block 52 to force the first locking block 52 to rotate, thereby making the locking pin 33 disengage from the first locking recess 523 of the first locking block 52 and move downward the guiding groove 511 of the fixing seat 51, until the locking pin 33 enters the second locking recess 533 of the second locking block 53. At this point, the locking pin 33 presses the second locking block 53. At last, the puller 40 is released and returns to its initial position where it is flush with the joint seat 30. At this time, the third retaining portion 541 of the retaining block 54 abuts against the second retaining portion 534 of the second locking block 53, as shown in FIG. 3, so the second locking block 53 is prevented from rotation and the locking pin 33 is engaged by the second locking recess 533. Now the joint seat 30 drives the handlebar stem 13 to come to an unfolded position P1, as shown in FIG. 1 and FIG. 2.

It is to be noted that the folding unit 50 may include at least one resilient element 59 (preferably two) deposited in the fixing seat 51. As shown in FIG. 3, the resilient element 59 props up the locking pin 33 when the joint seat 30 is at the unfolded position P1, so as to eliminate any gaps between the locking pin 33 and the second locking recess 533, thereby preventing the joint seat 30 at the unfolded position P1 from swaying and thereby ensuring good structural stability.

To sum up, the presently disclosed concealed folding mechanism 20 has the folding unit 50 concealed in the accommodating space 22 formed by the joint seat 30 and the puller 40 without being exposed outside, and has the puller 40 on the joint seat 30 at the unfolded position P1 flush with the joint seat 30, thereby effectively preventing accidental operation. Furthermore, the engagement between the locking pin 33 and the locking recesses 523, 533 helps to fix the components in position, so as to prevent separation even under road vibration. In other words, the presently disclosed concealed folding mechanism 20 is more structurally streamline and reliability as compared with the prior-art devices.

## Claims

1. A concealed folding mechanism (20) for a kick scooter (10), the concealed folding mechanism (20) comprising:
a joint seat (30);
a puller (40), pivotally connected to the joint seat (30) and defining an accommodating space (22) jointly with the joint seat (30); and
a folding unit (50), deposited in the accommodating space (22) and connected to the joint seat (30) and the puller (40), so that the folding unit (50) is controllable by the puller (40) to shift the joint seat (30) between a folded position (P2) and an unfolded position (P1).

2. The concealed folding mechanism (20) of claim 1, wherein the joint seat (30) has two opposite and symmetric joint pieces (31), and the puller (40) is pivotally connected between the two joint pieces (31) by means of a puller pivot (42), so that the puller (40) and the two joint pieces (31) jointly define the accommodating space (22).

3. The concealed folding mechanism (20) of claim 2, wherein when the joint seat (30) is at the unfolded position (P1), the puller (40) has an outer surface thereof substantially flush with top edges of the two joint pieces (31).

4. The concealed folding mechanism (20) of claim 2, wherein the joint seat (30) has a locking pin (33) that is connected between the two joint pieces (31), and the folding unit (50) has a fixing seat (51) that is deposited between the two joint pieces (31) and allows the puller pivot (42) to insert thereinto, in which the fixing seat (51) has a guiding groove (511) that receives the locking pin (33).

5. The concealed folding mechanism (20) of claim 4, wherein the puller (40) is connected to the fixing seat (51) by means of a first spring member (55) that provides a returning force to the puller (40).

6. The concealed folding mechanism (20) of claim 4, wherein the folding unit (50) further has a first locking block (52) and a second locking block (53), the first locking block (52) being pivotally installed in the fixing seat (51) and having a first locking recess (523), and the second locking block (53) being pivotally installed in the fixing seat (51) and having a second locking recess (533), so that when the joint seat (30) is at the folded position (P2), the locking pin (33) of the joint seat (30) engages with the first locking recess (523) of the first locking block (52), and when the joint seat (30) is at the unfolded position (P1), the locking pin (33) of the joint seat (30) engages with the second locking recess (533) of the second locking block (53).

7. The concealed folding mechanism (20) of claim 6, wherein the folding unit (50) further has a resilient element (59) that is deposited in the fixing seat (51), so that when the joint seat (30) is at the unfolded position (P1), the resilient element (59) abuts against the locking pin (33).

8. The concealed folding mechanism (20) of claim 6, wherein the first locking block (52) has a first retaining portion (524) that is adjacent to the first locking recess (523), so that when the joint seat (30) is shifting between the folded position (P2) and the unfolded position (P1), the locking pin (33) pushes the first retaining portion (524) and in turn forces the first locking block (52) to rotate.

9. The concealed folding mechanism (20) of claim 8, wherein the folding unit (50) has a second spring member (56) that is deposited on the first locking block (52) for providing a returning force to the first locking block (52).

10. The concealed folding mechanism (20) of claim 7, wherein the fixing seat (51) has a first limiting portion (512), and the first locking block (52) has a first limiting recess (522) that slidably receives the first limiting portion (512).

11. The concealed folding mechanism (20) of claim 7, wherein the fixing seat (51) has a second limiting portion (513), and the second locking block (53) has a second limiting recess (532) slidably receives the second limiting portion (513).

12. The concealed folding mechanism (20) of claim 7, wherein the second locking block (53) has a second retaining portion (534), and the folding unit (50) further has a retaining block (54) that is fixedly mounted on the puller pivot (42) and has a third retaining portion (541), in which the third retaining portion (541) of the retaining block (54) detachably abuts against the second retaining portion (534) of the second locking block (53).

13. The concealed folding mechanism (20) of claim 12, wherein the folding unit (50) further has a third spring member (57) that is deposited on the second locking block (53), so that when the third retaining portion (541) of the retaining block (54) and the second retaining portion (534) of the second locking block (53) disengage from each other, the second locking block (53) is driven to rotate by a pulling force applied by the third spring member (57).

14. The concealed folding mechanism (20) of claim 12, wherein the folding unit (50) further has a fourth spring member (58) that is deposited on the retaining block (54) for providing a resilience so as to make the third retaining portion (541) of the retaining block (54) abut against the second retaining portion (534) of the second locking block (53).

15. The concealed folding mechanism (20) of claim 12, wherein the fixing seat (51) has a third limiting portion (514), and the retaining block (54) has a third limiting recess (542) that slidably receives the third limiting portion (514).
